# EUROPEAN PATENT SPECIFICATION

(11) **EP 3 460 238 B1**
(45) Date of publication and mention of the grant of the patent: **15.04.2020**
(21) Application number: 17192101.8
(22) Date of filing: 20.09.2017
(51) Int. Cl.: F03D 1/06, F03D 80/70, F16C 21/00

(54) **WIND TURBINE**
WINDTURBINE
ÉOLIENNE

(43) Date of publication of application: 27.03.2019
(73) Proprietor: Siemens Gamesa Renewable Energy A/S, 7330 Brande (DK)
(72) Inventor: Frydendal, Niels Karl, 7400 Herning (DK); Kanstrup, Troels, 8763 Rask Moelle (DK); Olesen, Dennis, 8200 Aarhus (DK); Thomsen, Kim, 9520 Skørping (DK); Thorhauge, Morten, 8200 Aarhus (DK)
(74) Representative: Aspacher, Karl-Georg

(56) References cited:
- EP-A1- 2 568 167
- EP-A1- 2 568 168
- WO-A1-2013/042294
- US-A1- 2013 287 574

## Description

The present invention relates to a wind turbine.

Modern wind turbine rotor blades are built from fiber-reinforced plastics. A rotor blade typically comprises an airfoil having a rounded leading edge and a sharp trailing edge. The rotor blade is connected with its blade root to a hub of the wind turbine. The increasing size of wind turbines and the trend towards offshore turbines puts high demands on serviceability and robustness of the bearings of a shaft of the wind turbine. Also due to fact that large wind turbines have large dynamic shaft deflections, high loads and low speeds makes it challenging for bearings to work and last the demanded lifetime. Conventional wind turbine designs using roller bearings or ball bearings for carrying a drive train, a generator on direct drive wind turbines and the hub with blades require external crane capacity if a main bearing needs replacement. This type of service is very costly, especially for wind turbines located offshore.

EP 2 568 167 A1 describes a direct-drive wind turbine, wherein a rotor of the wind turbine is directly connected to a rotating drive train of the wind turbine. The rotating drive train is connected with a stationary part of the wind turbine via at least one bearing, which allows the rotation of the drive train in relation to the stationary part. The at least one bearing is a plain bearing. The bearing comprises at least one cylindrical sliding surface constructed to support radial loads present in the drive train. The bearing comprises at least two radial bearing surfaces constructed to support axial loads and bending moments present in the drive train. The surface areas of the radial bearing surfaces are dimensioned proportional to a predetermined maximum total load of the bending moments expected in the drive train.

US 2013/0287574 A1 describes a wind turbine. The wind turbine includes a stationary main shaft arranged within a nacelle of the wind turbine, a rotor hub including a hollow shell defining an interior and a plurality of rotor blades extending radially outwards from the rotor hub, wherein the rotor hub is rotatably mounted to the stationary main shaft via at least one bearing, wherein the at least one bearing is arranged within the interior of the rotor hub and connected to a section of the main shaft protruding into the interior of the rotor hub.

WO 2013/042294 A1 describes a power generating apparatus of renewable energy type which is capable of maintaining a concentricity between bearings and utilizing the space in a nacelle. The power generating apparatus of renewable energy type is provided with a blade, a hub rotating with the blade by the renewable energy received via the blade, a rotation shaft connected to the hub, a pair of bearings for supporting the rotation shaft rotatably, a nacelle including a nacelle base for supporting a bearing housing of each of the bearing from below and a connection frame for connecting upper parts of the bearing housings of the bearings.

It is one object of the present invention to provide an improved wind turbine.

Accordingly, a wind turbine according to claim 1 is provided. The wind turbine comprises a hub, a shaft which is connected to the hub, a bearing housing, in which the shaft is supported rotatable, wherein the shaft is arranged inside the bearing housing, a fluid bearing which supports the shaft in the bearing housing, wherein the fluid bearing is arranged at a proximal end of the shaft, wherein the proximal end of the shaft is positioned proximal to the hub, and a roller bearing which also supports the shaft in the bearing housing, wherein the roller bearing is arranged at a distal end of the shaft, and wherein the distal end of the shaft is positioned distal to the hub.

The fluid bearing provides a bearing type with high load capacity and scalability to even large wind turbines. The fluid bearing is also easy to make exchangeable in-situ if a segmented bearing is used. The combination of the fluid bearing at an upwind location of the shaft and the roller bearing at a downwind location of the shaft is a cost effective and low weight solution. The higher loaded fluid bearing can be easily exchanged when it is segmented. A cost effective and light turbine structure can be provided that allows for in-situ replacement of all main bearings. No crane or crane vessel is needed to replace the main bearings.

The position where the fluid bearing is arranged can be named upwind position or upwind location. The fluid bearing can therefore be named proximal bearing, proximal main bearing, upwind bearing or upwind main bearing. The position where the roller bearing is arranged can be named downwind position or downwind location. The roller bearing can therefore be named distal bearing, distal main bearing, downwind bearing or downwind main bearing. The proximal end of the shaft can be named first end, and the distal end of the shaft can be named second end. "Proximal" means close to the hub and "distal" means away from the hub, i.e. not close to the hub.

A shaft arrangement of the wind turbine comprises the bearing housing, the shaft, the roller bearing and the fluid bearing. A roller bearing, rolling-element bearing or rolling bearing preferably is a bearing which carries a load by placing rolling elements (such as balls or rollers) between two bearing rings called races. The relative motion of the races causes the rolling elements to roll with very little rolling resistance and with little sliding. The shaft can be rotated in the bearing housing around an axis or rotation axis. The wind turbine further comprises blades that are connected to the hub.

Fluid bearings or fluid film bearings are bearings in which the load is supported by a thin layer of rapidly moving pressurized liquid or gas between the bearing surfaces. Since there is no contact between the moving parts, there is no sliding friction, allowing fluid bearings to have lower friction, wear and vibration than many other types of bearings. Fluid bearings can be broadly classified into two types: Fluid dynamic bearings (also known as hydrodynamic bearings) and hydrostatic bearings. Hydrostatic bearings are externally pressurized fluid bearings, where the fluid is usually oil, water or air, and the pressurization is done by a pump. Hydrodynamic bearings rely on the high speed of the journal (the part of the shaft resting on the fluid) to pressurize the fluid in a wedge between the faces. Preferably, the fluid bearing is a hydrostatic bearing.

According to an embodiment, the fluid bearing is segmented. This means, the fluid bearing has a bearing surface that is divided into a variety of segments. These segments can be changed individually.

According to a further embodiment, the fluid bearing is a tilting pad bearing. A tilting pad bearing has sectional shoes, or pads on pivots. When the tilting pad bearing is in operation, the rotating part of the tilting pad bearing carries fresh oil into the pad area through viscous drag. Fluid pressure causes the pad to tilt slightly, creating a narrow constriction between the shoe and the other bearing surface. A wedge of pressurized fluid builds behind this constriction, separating the moving parts. The tilt of the pad adaptively changes with bearing load and speed. Various design details ensure continued replenishment of the oil to avoid overheating and pad damage.

According to a further embodiment, the roller bearing is a double row tapered roller bearing in X-configuration, a spherical roller bearing, a double row tapered roller bearing or a triple row cylindrical roller bearing. In case of a double row tapered roller bearing in X-configuration this means that the roller bearing has two rows of tapered rollers. These two rows are arranged in such a way that a rotation axis of the tapered rollers are arranged in a X-position. However, any other type of roller bearing can be used.

According to a further embodiment, the fluid bearing takes only loads that act in a radial direction of the shaft. The radial direction is arranged perpendicular to the rotation axis of the shaft. The fluid bearing cannot take loads that act in an axial direction of the shaft.

According to a further embodiment, the roller bearing takes loads that act in a radial direction of the shaft and loads that act in an axial direction of the shaft. The loads that act in the axial direction can be named axial loads. The loads that act in the radial direction can be named radial loads. The axial direction is positioned parallel to the axis of the shaft.

According to a further embodiment, a diameter of the fluid bearing is bigger than a diameter of the roller bearing. The roller bearing is usually lighter loaded compared to the fluid bearing. The fluid bearing typically sees very high radial loads due to the weight of the hub and the blades. The roller bearing is subjected to lighter loads and therefore it is easier to manufacture within known roller bearing know-how and size constraints.

According to a further embodiment the shaft is hollow. Therefore, a weight reduction can be achieved. Alternatively, the shaft can be solid. The shaft preferably is arranged inside the bearing housing.

According to a further embodiment, the wind turbine further comprises a generator, wherein the generator is mounted to the proximal end of the shaft. This means, the generator is mounted close to the fluid bearing. When the generator is mounted at the upwind location of the shaft, the roller bearing at the downwind location can be dismounted and replaced in-situ because the distal end of the shaft is free. In other words, nothing is mounted to the distal end of the shaft. This type of wind turbine can be called direct drive wind turbine.

According to a further embodiment, the generator is mounted to a proximal end of the bearing housing. This means, the generator is mounted to the proximal end of the shaft as well as to the proximal end of the bearing housing.

According to a further embodiment, the generator is mounted to a proximal flange of the shaft and to a proximal flange of the bearing housing. For example, the proximal flange of the bearing housing can be connected to a stator of the generator and the proximal flange of the shaft can be connected to a rotor of the generator or vice versa.

According to a further embodiment, the wind turbine further comprises a generator, wherein the generator is mounted to the distal end of the shaft. This means, the generator is mounted close to the roller bearing. A gearbox can also be mounted to the distal end of the shaft.

According to a further embodiment, the wind turbine further comprises a tower, wherein the bearing housing is connected to the tower. The bearing housing preferably can be rotated relative to the tower. The bearing housing can be arranged inside a nacelle. The bearing housing can be part of the nacelle.

According to a further embodiment, the shaft is shaped conical, wherein the shaft narrows from its proximal end towards its distal end. Preferably, the shaft has the shape of a truncated cone. A diameter of the shaft gradually reduces from the proximal end towards the distal end.

According to a further embodiment, the bearing house is made of one piece. Preferably, the bearing housing is a cast part. The bearing housing can also be a combined unit. In particular, the bearing housing can comprise two separate units or could even be an integrated part of a gearbox.

"Wind turbine" presently refers to an apparatus converting the wind's kinetic energy into rotational energy, which may again be converted to electrical energy by the apparatus.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 is a perspective view of a wind turbine according to one embodiment;
Fig. 2 is a perspective view of a wind turbine rotor blade according to one embodiment;
Fig. 3 shows a sectional view of a shaft arrangement according to one embodiment; and
Fig. 4 shows a perspective sectional view of the wind turbine according to Fig. 1.

In the Figures, like reference numerals designate like or functionally equivalent elements, unless otherwise indicated.

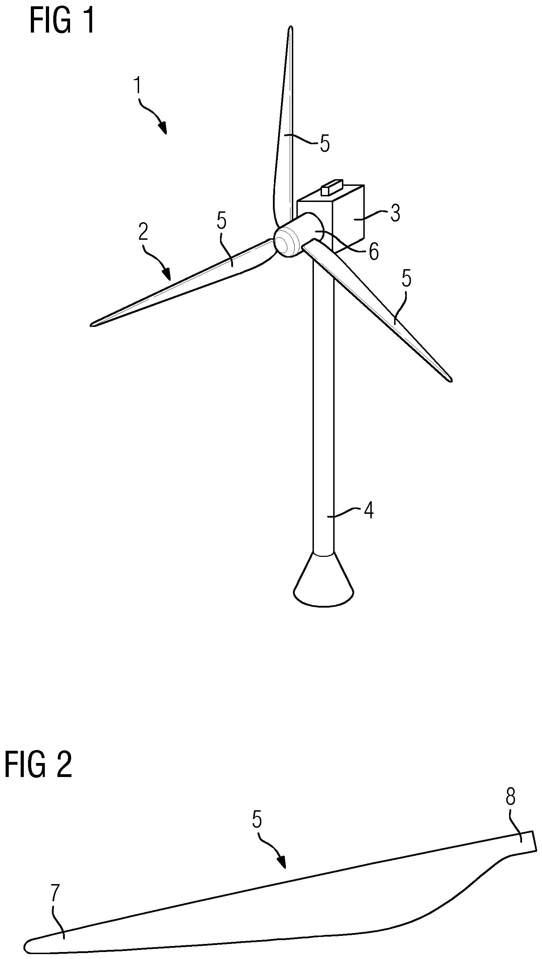

Fig. 1 shows a wind turbine 1 according to one embodiment.

The wind turbine 1 comprises a rotor 2 connected to a generator (not shown) arranged inside a nacelle 3. The nacelle 3 is arranged at the upper end of a tower 4 of the wind turbine 1.

The rotor 2 comprises three rotor blades 5. The rotor blades 5 are connected to a hub 6 of the wind turbine 1. Rotors 2 of this kind may have diameters ranging from, for example, 30 to 160 meters or even more. The rotor blades 5 are subjected to high wind loads. At the same time, the rotor blades 5 need to be lightweight. For these reasons, rotor blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

Fig. 2 shows a rotor blade 5 according to one embodiment.

The rotor blade 5 comprises an aerodynamically designed portion 7, which is shaped for optimum exploitation of the wind energy and a blade root 8 for connecting the rotor blade 5 to the hub 6.

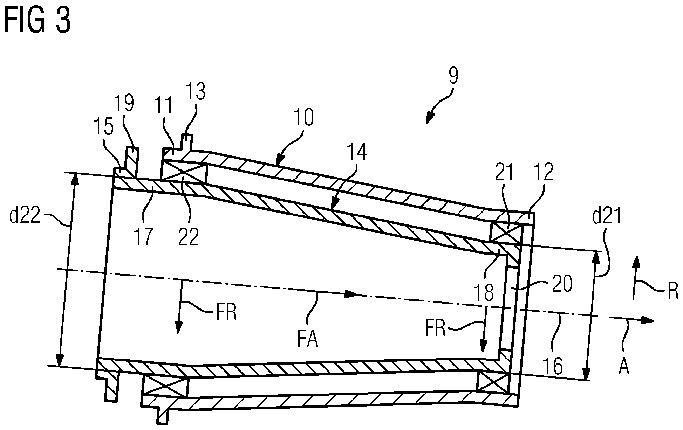

Fig. 3 shows a shaft arrangement 9 according to one embodiment.

The shaft arrangement 9 is arranged inside the nacelle 3 and/or is part of the nacelle 3. The shaft arrangement 9 is arranged to support the hub 6 rotatable. The shaft arrangement 9 comprises a bearing housing 10. The bearing housing 10 can be a combined unit. Furthermore, the bearing housing could also comprise two separate units or could even be an integrated part of a gearbox (not shown). The bearing housing 10 is hollow and comprises a first end or proximal end 11 which is arranged close or proximal to the hub 6 (not shown in Fig. 3). The bearing housing 10 also comprises a second end or distal end 12 which is arranged away from the hub 6 or distal to the hub 6. The bearing housing 10 further comprises a flange 13 for mounting a generator (not shown) to the bearing housing 10. The flange 13 can be named as first generator flange or proximal flange.

The shaft arrangement 9 further comprises a hub shaft, main shaft or shaft 14 which is connected to the hub 6. The hub 6 can be connected to the shaft 14 by means of screws and/or bolts. The shaft 14 has a flange 15 for connecting the shaft 14 to the hub 6. The flange 15 can be named as hub flange or first flange of the shaft 14. The shaft 14 is supported rotatable in the bearing housing 10. This means, the shaft can be rotated relative to the bearing housing 10 around a rotating axis 16. The shaft 14 is shown as a big thin walled construction. It could also be a traditional shaft, as for any wind turbine 1 with two main bearings and a shaft.

The shaft 14 has a first end or proximal end 17. The proximal end 17 is arranged close or proximal to the hub 6. In particular, the proximal end 17 of the shaft 14 is positioned at the proximal end 11 of the bearing housing 10. The shaft 14 also has a second end or distal end 18. The distal end 18 is arranged away from or distal to the hub 6. In particular, the distal end 18 of the shaft 14 is positioned at the distal end 12 of the bearing housing 10.

As can be seen from Fig. 3, the shaft 14 is hollow. The shaft 14 has a flange 19 for mounting the afore-mentioned generator to the shaft 14. The flange 19 can be named as proximal flange, second generator flange or second flange of the shaft 14. For example, the flange 13 of the bearing housing 10 can be connected to a stator of the generator and the flange 19 of the shaft 14 can be connected to a rotor of the generator or vice versa. The shaft 14 also has a flange 20 for gearbox or generator mount. The flange 20 can be named as distal flange or third flange of the shaft 14.

The shaft arrangement 9 has a roller bearing 21 which supports the shaft 14 in the bearing housing 10 at the distal end 12 of the bearing housing 10 and the distal end 18 of the shaft 14.

The location where the roller bearing 21 is arranged can be named as downwind location. A roller bearing, rolling-element bearing or rolling bearing is a bearing which carries a load by placing rolling elements (such as balls or rollers) between two bearing rings called races. The relative motion of the races causes the rolling elements to roll with very little rolling resistance and with little sliding. The roller bearing 21 can be named as first bearing, downwind bearing, downwind main bearing or distal bearing because it is arranged distal to the hub 6. The roller bearing 21 has an inner diameter d21.

The roller bearing 21 is arranged to take loads FA, FR both in an axial direction A and in a radial direction R of the shaft 14. The roller bearing 21 can be any type of roller bearing, for example a spherical roller bearing, a double row tapered roller bearing, a triple row cylindrical roller bearing or the like. The preferred bearing type for the roller bearing 21 is a double row tapered roller bearing in X-configuration because this bearing type has little resistance towards shaft bending and high radial load capacity as well as sufficient axial load capacity. But any combination of roller or ball bearing can be used to support the shaft 14 at the distal end 18 thereof.

The shaft arrangement 9 also has a fluid film bearing or fluid bearing 22 which supports the shaft 14 in the bearing housing 10 at the proximal end 11 of the bearing housing 10 and the proximal end 17 of the shaft 14. The location where the fluid bearing 22 is arranged can be named as upwind location. The fluid bearing 22 can be named as second bearing, upwind bearing, upwind main bearing or proximal bearing because it is arranged proximal to the hub 6. The fluid bearing 22 is arranged to take only loads FR in the radial direction R but not in the axial direction A of the shaft 14. The fluid bearing 22 has an inner diameter d22. The inner diameter d22 of the fluid bearing 22 is bigger than the inner diameter d21 of the roller bearing 21.

Fluid bearings are bearings in which the load is supported by a thin layer of rapidly moving pressurized liquid or gas between the bearing surfaces. Since there is no contact between the moving parts, there is no sliding friction, allowing fluid bearings to have lower friction, wear and vibration than many other types of bearings. Fluid bearings can be broadly classified into two types: Fluid dynamic bearings (also known as hydrodynamic bearings) and hydrostatic bearings. Hydrostatic bearings are externally pressurized fluid bearings, where the fluid is usually oil, water or air, and the pressurization is done by a pump. Hydrodynamic bearings rely on the high speed of the journal (the part of the shaft resting on the fluid) to pressurize the fluid in a wedge between the faces.

Preferably, the fluid bearing 22 is a hydrostatic bearing. In particular, the fluid bearing 22 is segmented so that the bearing components can be replaced in-situ. This means, without disassembly of the shaft arrangement 9 and/or the wind turbine 1. Preferably, the fluid bearing 22 is a tilting pad bearing. A tilting pad bearing has sectional shoes, or pads on pivots. When the tilting pad bearing is in operation, the rotating part of the tilting pad bearing carries fresh oil in to the pad area through viscous drag. Fluid pressure causes the pad to tilt slightly, creating a narrow constriction between the shoe and the other bearing surface. A wedge of pressurized fluid builds behind this constriction, separating the moving parts. The tilt of the pad adaptively changes with bearing load and speed. Various design details ensure continued replenishment of the oil to avoid overheating and pad damage.

To use the roller bearing 21 instead of a second fluid bearing is a very cost effective solution that would otherwise require two separate fluid film bearings to replace the roller bearing 21. Namely a first bearing for radial loads and a second bearing for axial loads and another fluid film bearing at the upwind location. This means, in total three bearings. The roller bearing 21 is usually lighter loaded compared to the fluid bearing 22. The fluid bearing 22 typically sees very high radial load FR due to the weight of the hub 6 and the rotor blades 5. The roller bearing 21 is loaded lighter and therefore it is easier to manufacture within known roller bearing know-how and size constraints.

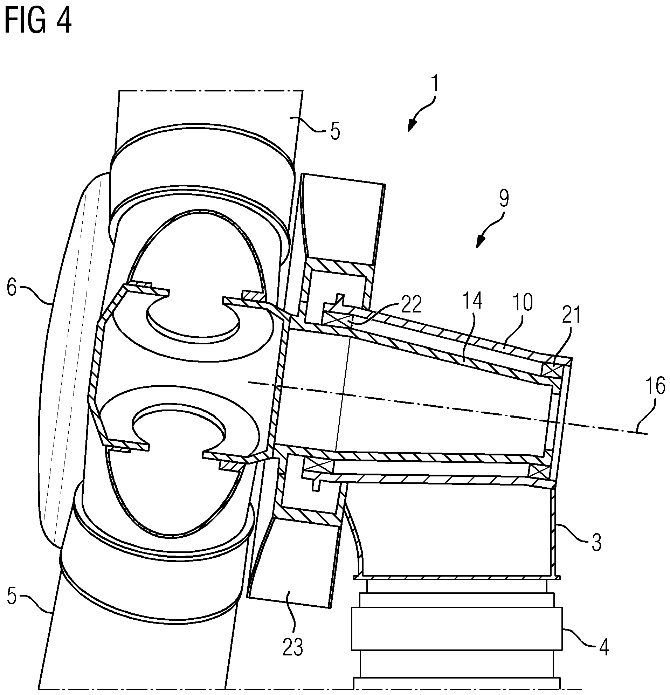

Fig. 4 shows a detail view of the wind turbine 1 according to Fig. 1.

As can be seen from Fig. 4, a generator 23 is mounted to the flanges 13, 19 of the bearing housing 10 and the shaft 14. The configuration of Fig. 4, wherein the generator 23 is mounted at the upwind location of the shaft 14, the roller bearing 21 at the downwind location can be dismounted and replaced in-situ because the distal end 18 of the shaft 14 is free. In other words, nothing is mounted to the distal end 18 of the shaft 14. As can be seen from Fig. 4, the bearing housing 10 is mounted to the tower 4.

However, the shaft arrangement 9 can also be used with a traditional geared wind turbine (not shown). In this case, it is more labor-intensive to replace the roller bearing 21 because the gearbox is mounted next to the roller bearing 21 at the flange 20 of the shaft 14.

An alternative realization (not shown) is that the roller bearing 21 is an integrated part of the gearbox. In this case, the roller bearing 21 would be replaced together with the gearbox and the fluid bearing 22 would be replaced by exchanging the segments on site. It is also possible to use fluid bearings both at the upwind and at the downwind location. This, however, involves higher mass and also more complex structure.

The wind turbine 1 with the shaft arrangement 9 has the following advantages. The fluid bearing 22 provides a bearing type with high load capacity and scalability to even large wind turbines. The fluid bearing 22 is also easy to make exchangeable in-situ if a segmented or tilting pad bearing is used. However, to realize both a thrust bearing and a radial bearing it requires a construction that can be realized lighter and cheaper with a single double row tapered roller bearing 21. This roller bearing 21 can be used and still maintain the possibility to exchange all bearing parts in-situ.

The combination of the fluid bearing 22 at the upwind location, where segmentation is preferred to perform in-situ replacement, and the roller bearing 21 at the downwind location is a cost effective and low weight solution. The higher loaded fluid bearing 22 can be easily exchanged when it is segmented or a tilting pad bearing. A cost effective and light turbine structure can be provided that allows for in-situ replacement of all main bearings 21, 22.

Although the present invention has been described in accordance with preferred embodiments, it is obvious for the person skilled in the art that modifications are possible in all embodiments within the scope of the appended claims.

## Claims

1. A wind turbine (1), comprising a hub (6), a shaft (14) which is connected to the hub (6), a bearing housing (10), in which the shaft (14) is supported rotatable, wherein the shaft (14) is arranged inside the bearing housing (10), a fluid bearing (22) which supports the shaft (14) in the bearing housing (10), wherein the fluid bearing (22) is arranged at a proximal end (17) of the shaft (14), wherein the proximal end (17) of the shaft (14) is positioned proximal to the hub (6), and a roller bearing (21) which also supports the shaft (14) in the bearing housing (10), wherein the roller bearing (21) is arranged at a distal end (18) of the shaft (14), and wherein the distal end (18) of the shaft (14) is positioned distal to the hub (6).

2. The wind turbine according to claim 1, wherein the fluid bearing (22) is segmented.

3. The wind turbine according to claim 1 or 2, wherein the fluid bearing (22) is a tilting pad bearing.

4. The wind turbine according to one of claims 1 - 3, wherein the roller bearing (21) is a double row tapered roller bearing in X-configuration, a spherical roller bearing, a double row tapered roller bearing or a triple row cylindrical roller bearing.

5. The wind turbine according to one of claims 1 - 4, wherein the fluid bearing (22) takes only loads (FR) that act in a radial direction (R) of the shaft (14) and cannot take loads (FA) that act in an axial direction (A) of the shaft (14) .

6. The wind turbine according to one of claims 1 - 5, wherein the roller bearing (21) takes loads (FR) that act in a radial direction (R) of the shaft (14) and loads (FA) that act in an axial direction (A) of the shaft (14).

7. The wind turbine according to one of claims 1 - 6, wherein a diameter (d22) of the fluid bearing (22) is bigger than a diameter (d21) of the roller bearing (21).

8. The wind turbine according to one of claims 1 - 7, wherein the shaft (14) is hollow.

9. The wind turbine according to one of claims 1 - 8, further comprising a generator (23), wherein the generator (23) is mounted to the proximal end (17) of the shaft (14).

10. The wind turbine according to claim 9, wherein the generator (23) is mounted to a proximal end (11) of the bearing housing.

11. The wind turbine according to claim 10, wherein the generator (23) is mounted to a proximal flange (19) of the shaft (14) and to a proximal flange (13) of the bearing housing (10).

12. The wind turbine according to one of claims 1 - 8, further comprising a generator (23), wherein the generator (23) is mounted to the distal end (18) of the shaft (14).

13. The wind turbine according to one of claims 1 - 12, further comprising a tower (4), wherein the bearing housing (10) is connected to the tower (4).

14. The wind turbine according to one of claims 1 - 13, wherein the shaft (14) is shaped conical, and wherein the shaft (14) narrows from its proximal end (17) towards its distal end (18).

15. The wind turbine according to one of claims 1 - 14, wherein the bearing house (10) is made of one piece.

## Patentansprüche

1. Windturbine (1) mit einer Nabe (6), einer mit der Nabe (6) verbundenen Welle (14), einem Lagergehäuse (10), in dem die Welle (14) drehbar gelagert ist, wobei die Welle (14) in dem Lagergehäuse (10) angeordnet ist, einem Lager (22) mit Flüssigkeitsreibung, das die Welle (14) in dem Lagergehäuse (10) lagert, wobei das Lager (22) mit Flüssigkeitsreibung an einem proximalen Ende (17) der Welle (14) angeordnet ist, das proximal zur Nabe (6) positioniert ist, und einem Wälzlager (21), das auch die Welle (14) in dem Lagergehäuse (10) lagert, wobei das Wälzlager (21) an einem distalen Ende (18) der Welle (14) angeordnet und das distale Ende (18) der Welle (14) distal zur Nabe (6) positioniert ist.

2. Windturbine nach Anspruch 1, wobei das Lager (22) mit Flüssigkeitsreibung segmentiert ist.

3. Windturbine nach Anspruch 1 oder 2, wobei es sich bei dem Lager (22) mit Flüssigkeitsreibung um ein Kippsegmentlager handelt.

4. Windturbine nach einem der Ansprüche 1 bis 3, wobei es sich bei dem Wälzlager (21) um ein zweireihiges Kegelrollenlager in X-Konfiguration, ein Pendelrollenlager, ein zweireihiges Kegelrollenlager oder ein dreireihiges Zylinderrollenlager handelt.

5. Windturbine nach einem der Ansprüche 1 bis 4, wobei das Lager (22) mit Flüssigkeitsreibung nur in radialer Richtung (R) der Welle (14) wirkende Lasten (FR) aufnimmt und keine in axialer Richtung (A) der Welle (14) wirkenden Lasten (FA) aufnehmen kann.

6. Windturbine nach einem der Ansprüche 1 bis 5, wobei das Wälzlager (21) in radialer Richtung (R) der Welle (14) wirkende Lasten (FR) und in axialer Richtung (A) der Welle (14) wirkende Lasten (FA) aufnimmt.

7. Windturbine nach einem der Ansprüche 1 bis 6, wobei ein Durchmesser (d22) des Lagers (22) mit Flüssigkeitsreibung größer ist als ein Durchmesser (d21) des Wälzlagers (21).

8. Windturbine nach einem der Ansprüche 1 bis 7, wobei die Welle (14) hohl ist.

9. Windturbine nach einem der Ansprüche 1 bis 8, die ferner einen Generator (23) umfasst, der an das proximale Ende (17) der Welle (14) montiert ist.

10. Windturbine nach Anspruch 9, wobei der Generator (23) an ein proximales Ende (11) des Lagergehäuses montiert ist.

11. Windturbine nach Anspruch 10, wobei der Generator (23) an einen proximalen Flansch (19) der Welle (14) und an einen proximalen Flansch (13) des Lagergehäuses (10) montiert ist.

12. Windturbine nach einem der Ansprüche 1 bis 8, die ferner einen Generator (23) umfasst, der an das distale Ende (18) der Welle (14) montiert ist.

13. Windturbine nach einem der Ansprüche 1 bis 12, die ferner einen Turm (4) umfasst, wobei das Lagergehäuse (10) mit dem Turm (4) verbunden ist.

14. Windturbine nach einem der Ansprüche 1 bis 13, wobei die Welle (14) konisch geformt ist und sich von ihrem proximalen Ende (17) aus zu ihrem distalen Ende (18) hin verjüngt.

15. Windturbine nach einem der Ansprüche 1 bis 14, wobei das Lagergehäuse (10) einstückig gefertigt ist.

## Revendications

1. Éolienne (1), comprenant un moyeu (6), un arbre (14) qui est raccordé au moyeu (6), un boîtier de roulement (10), dans laquelle l'arbre (14) est supporté en rotation, dans laquelle l'arbre (14) est agencé à l'intérieur du boîtier de roulement (10), un palier à fluide (22) qui supporte l'arbre (14) dans le boîtier de roulement (10), dans laquelle le palier à fluide (22) est agencé à une extrémité proximale (17) de l'arbre (14), dans laquelle l'extrémité proximale (17) de l'arbre (14) est positionnée de manière proximale par rapport au moyeu (6), et un roulement à rouleaux (21) qui supporte également l'arbre (14) dans le boîtier de roulement (10), dans laquelle le roulement à rouleaux (21) est agencé à une extrémité distale (18) de l'arbre (14), et dans laquelle l'extrémité distale (18) de l'arbre (14) est positionnée de manière distale par rapport au moyeu (6).

2. Éolienne selon la revendication 1, dans laquelle le palier à fluide (22) est segmenté.

3. Éolienne selon la revendication 1 ou 2, dans laquelle le palier à fluide (22) est un palier à patins oscillants.

4. Éolienne selon l'une quelconque des revendications 1 à 3, dans laquelle le roulement à rouleaux (21) est un roulement à rouleaux conique à double rangées en configuration de X, un roulement à rouleaux sphérique, un roulement à rouleaux conique à double rangées ou un roulement à rouleaux cylindrique à triple rangées.

5. Éolienne selon l'une quelconque des revendications 1 à 4, dans laquelle le palier à fluide (22) prend uniquement des charges (FR) qui agissent dans une direction radiale (R) de l'arbre (14) et ne peut pas prendre de charges (FA) qui agissent dans une direction axiale (A) de l'arbre (14).

6. Éolienne selon l'une des revendications 1 à 5, dans laquelle le roulement à rouleaux (21) prend des charges (FR) qui agissent dans une direction radiale (R) de l'arbre (14) et des charges (FA) qui agissent dans une direction axiale (A) de l'arbre (14).

7. Éolienne selon l'une des revendications 1 à 6, dans laquelle un diamètre (d22) du palier à fluide (22) est supérieur à un diamètre (d21) du roulement à rouleaux (21).

8. Éolienne selon l'une des revendications 1 à 7, dans laquelle l'arbre (14) est creux.

9. Éolienne selon l'une des revendications 1 à 8, comprenant en outre un générateur (23), dans laquelle le générateur (23) est monté sur l'extrémité proximale (17) de l'arbre (14).

10. Éolienne selon la revendication 9, dans laquelle le générateur (23) est monté sur une extrémité proximale (11) du boîtier de roulement.

11. Éolienne selon la revendication 10, dans laquelle le générateur (23) est monté sur une bride proximale (19) de l'arbre (14), et sur une bride proximale (13) du boîtier de roulement (10).

12. Éolienne selon l'une des revendications 1 à 8, comprenant en outre un générateur (23), dans laquelle le générateur (23) est monté sur l'extrémité distale (18) de l'arbre (14).

13. Éolienne selon l'une des revendications 1 à 12, comprenant en outre une tour (4), dans laquelle le boîtier de roulement (10) est raccordé à la tour (4).

14. Éolienne selon l'une des revendications 1 à 13, dans laquelle l'arbre (14) est de forme conique, et dans laquelle l'arbre (14) se rétrécit de son extrémité proximale (17) vers son extrémité distale (18).

15. Éolienne selon l'une des revendications 1 à 14, dans laquelle le boîtier de roulement (10) est réalisé en une seule pièce.
